Europäisches Patentamt

European Patent Office

Office européen des brevets

(11) Veröffentlichungsnummer : **0 250 911 B1**

# (12) EUROPÄISCHE PATENTSCHRIFT

(45) Veröffentlichungstag der Patentschrift :
03.07.91 Patentblatt 91/27

(51) Int. Cl.⁵ : **A22C 7/00**

(21) Anmeldenummer : **87108052.9**

(22) Anmeldetag : **04.06.87**

(54) Vorrichtung zum Aufbewahren von Frischfleisch.

(30) Priorität : 03.07.86 DE 8617814 U

(43) Veröffentlichungstag der Anmeldung :
07.01.88 Patentblatt 88/01

(45) Bekanntmachung des Hinweises auf die
Patenterteilung :
03.07.91 Patentblatt 91/27

(84) Benannte Vertragsstaaten :
AT BE CH DE ES FR GB GR IT LI LU NL SE

(56) Entgegenhaltungen :
EP-A- 0 114 176
CH-A- 100 928
CH-A- 423 531
DE-A- 2 848 060
FR-A- 1 246 246
FR-A- 1 248 037
FR-A- 1 535 747

(73) Patentinhaber : **VESTEN AG**
**Dorfplatz 9**
**CH-6370 Stans (CH)**

(72) Erfinder : **Aemig, René**
**Am Bleidriesch 2**
**W-5300 Bonn (DE)**
Erfinder : **Jansen, Diedrik**
**Koekoeklan 43**
**1403 EC Bussum (NL)**

(74) Vertreter : **Patentanwälte Dr. Solf & Zapf**
**Schlossbleiche 20 Postfach 13 01 13**
**W-5600 Wuppertal 1 (DE)**

EP 0 250 911 B1

## Beschreibung

Die Erfindung betrifft eine Vorrichtung zum Aufbewahren und Reifen von Frischfleisch unter mechanischem Druck mit druckbedingtem Austritt des fleischeigenen Saftes beim Pressvorgang, bestehend aus einem Behälter mit einem oben offenen Innenraum zur Aufnahme des Fleisches, einem von oben in den Behälter-Innenraum einsetzbaren Deckel, dessen Fläche geringfügig kleiner als die Querschnittsfläche des Behälter-Innenraumes ist, sowie einer den Deckel in den Behälter-Innenraum pressenden Druckbeaufschlagungseinrichtung.

Eine derartige Vorrichtung ist aus der europäischen Patentanmeldung mit der Veröffentlichungsnummer 0 114 176 bekannt. Frisches, insbesondere ausgebeintes und schlachtwarmes Fleisch wird in den Behälter eingelegt und der Deckel von oben auf das Fleisch aufgelegt. Mittels der Druckbeaufschlagungseinrichtung wird der Deckel in den Behälter gepreßt, wodurch das Fleisch derart komprimiert wird, daß Saft aus dem Fleisch nach oben austritt. Dabei wird auch der größte Teil der zwischen den Fleischstücken befindlichen Luft herausgepreßt, so daß das Fleisch praktisch gegen Luftsauerstoff abgeschlossen ist. Hierdurch werden auch ohne Gefrierkühlung oder schnelles Abkühlen bei Temperaturen von etwa 2°-5°C lange Haltbarkeiten von bis zu sechs Wochen erreicht, ohne die Qualität des Fleisches zu beeinträchtigen. Vielmehr kann sogar eine Qualitätssteigerung erreicht werden, da das Fleisch unter Sauerstoffabschluß bei langsam sinkenden Temperaturen "reifen" kann.

Bei der bekannten Vorrichtung hat sich jedoch in der Praxis herausgestellt, daß bei der Kühlung des Fleisches auf eine Temperatur von etwa 2°-5°C der zumeist aus Edelstahl bestehende Behälter in einem geringeren Maß schrumpft als das Fleisch, so daß der Druck innerhalb des Behälters sinkt. Weiterhin unterliegt ein gefüllter Behälter oftmals großen Temperaturschwankungen, wenn er nämlich beispielsweise nachts im Kühlraum gelagert und am Tag in einem Verkaufsraum zur Fleischentnahme bereitgestellt wird. Der bisher verwendete Edelstahl-Behälter ist nicht in der Lage, die temperaturänderungsbedingte Volumenänderung des Fleisches über längere Zeit hinweg auszugleichen, da seine Elastizität ermüdet. Ferner erfolgt bei einer Abkühlung auch der Temperaturübergang bei einem Behälter aus Edelstahl zu schnell, so daß sich Kondenswasser bildet, was sich nachteilig auf die Qualität des Fleisches und die Ausbeute auswirken kann.

Der Erfindung liegt daher die Aufgabe zugrunde, die bekannte Vorrichtung der eingangs beschriebenen Art so zu verbessern, daß innerhalb des Behälters stets möglichst konstante Druckverhältnisse vorliegen und daß Kondenswasserbildung vermieden wird.

Erfindungsgemäß wird dies dadurch erreicht, daß der Behälter aus einem Material besteht, das eine derartige Elastizität sowie einen derartigen Wärmeausdehnungskoeffizient aufweist, daß temperaturänderungsbedingte Volumenänderungen des Fleisches durch Schrumpfung oder Dehnung des Behälters ausgeglichen werden, so daß innerhalb des Behälters stets möglichst konstante Druckverhältnisse vorliegen. Weiterhin ist es vorteilhaft, wenn das Behältermaterial eine geringe Wärmeleitfähigkeit aufweist. Hierzu ist insbesondere ein Kunststoff, und zwar ein glasfaserverstärkter Kunststoff geeignet, der sowohl ein äußerst gutes Elastizitätsverhalten bei Temperaturänderungen als auch eine geringe Wärmeleitfähigkeit aufweist. Das Abkühlen des Behälters und seines Inhalts erfolgt hierdurch so langsam, daß jegliche Kondenswasserbildung ausgeschlossen ist. Der erfindungsgemäße Behälter übt außerdem in einem Kühlraum stehend einen Schrumpfdruck auf seinen Inhalt aus, da er durch die Druckbeaufschlagung elastisch gedehnt, d.h. vorgespannt ist, und da die durch den Wärmeausdehnungkoeffizient bestimmte Schrumpfung des verwendeten Materials größer als die Schrumpfung des Fleisches ist. Hierdurch übt der Behälter mit seinen Wandungen vorteilhafterweise einen sich verstärkenden Druck auf das Fleisch aus, so daß über einige Tage hinweg noch zwischen den Fleischstücken vorhandene Luft durch das elastische Schrumpfverhalten des Behälters ausgetrieben wird. Dies führt noch zu einer weiteren Verlängerung der möglichen Lagerzeit des Fleisches, ohne daß Gefahr bestünde, daß das Fleisch durch Luftsauerstoff an Qualität verliert. Weitere vorteilhafte Ausgestaltungsmerkmale der Erfindung sind in den Unteransprüchen enthalten.

Anhand der Zeichnung soll im folgenden die Erfindung beispielhaft näher erläutert werden. Dabei zeigen:

Fig. 1      eine Perspektivansicht eines Behälters sowie eines Deckels der erfindungsgemäßen Vorrichtung,

Fig. 2      eine Perspektivansicht einer Druckbeaufschlagungseinrichtung und

Fig. 3a und 3b      Querschnittansichten längs der Linie III-III gemäß Fig. 1 von zwei unterschiedlichen Ausbildungen des Deckels.

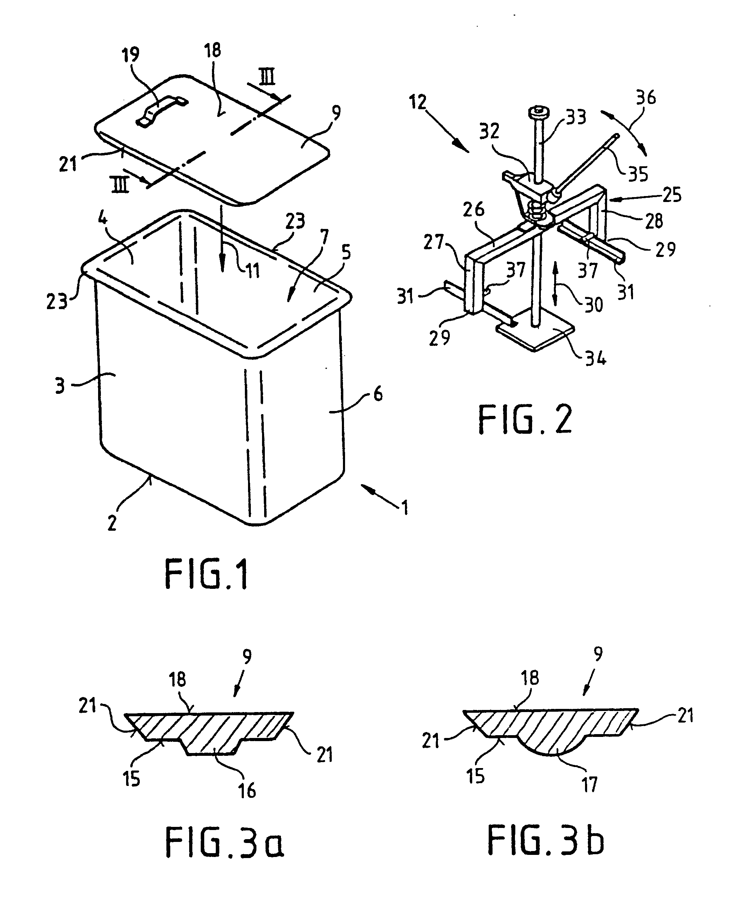

Eine erfindungsgemäße Vorrichtung zum Aufbewahren von Frisfleisch besteht aus einem Behälter 1 zur Aufnahme von nicht-dargestelltem Fleisch. Der Behälter 1 ist im dargestellten Ausführungsbeispiel mit rechteckigem Querschnitt mit einem Boden 2 und vier Seitenwandungen 3, 4, 5 und 6 ausgebildet. Weiterhin ist der Behälter 1 oben offen ausgebildet. In seinen von den Wandungen 3 bis 6 begrenzten Innenraum 7 ist von oben ein Deckel 9 in Pfeilrichtung 11 einsetzbar und mittels einer Druckbeaufschlagungseinrichtung 12 (Fig. 2), deren Funktion im folgenden noch erläutert wird, einpreßbar. Der Deckel 9 ist flächenmäßig geringfügig kleiner als die Querschnittsfläche des Behälter-Innenraumes 7, so daß zwischen dem Deckel 9 und zumindest einer der Wandungen 3 bis 6 stets ein Spalt vorhanden ist, durch den der bei Druckbeaufschlagung aus dem Fleisch austretende Fleischsaft fließen und Luft austreten kann. Die Druckausübung erfolgt solange bis der Deckel 9 vom Saft bedeckt ist.

Erfindungsgemäß besteht der Behälter 1 aus einem Material, das eine derartige Elastizität und einen derartigen Wärmeausdehnungskoeffizient aufweist, daß temperaturänderungsbedingte Volumenänderungen des Fleisches durch Schrumpfung oder Dehnung des Behälters 1, d.h. seines Bodens 2 sowie seiner Wandungen 3, 4, 5, 6, ausgeglichen werden. Das verwendete Material weist darüberhinaus auch eine geringe Wärmeleitfähigkeit auf. Es eignet sich hierzu besonders ein Kunststoffmaterial, und zwar ein glasfaserverstärkter Kunststoff, der neben der geforderten Elastizität und der geringen Wärmeleitfähigkeit auch eine gute, mechanische Festigkeit aufweist, so daß auch hohe Drücke problemlos möglich sind. Vorteilhafterweise besteht der Behälter 1 aus einer Außenschicht aus Polyester-Harz und Glasfasermatten, auf die eine Innen-Deckschicht aus Basis-Polyester-Harz, die beigemischte Farbpigmente enthalten kann, aufgebracht ist. Eine Behälter-Zusammensetzung von etwa 60% Polyester-Harz, etwa 30% Glasfasermatten und etwa 10% Deckschicht (jeweils Gewichtsprozente) hat sich als vorteilhaft erwiesen. Der erfindungsgemäße Behälter 1 ist gut zu reinigen, hygienisch und lebensmittelneutral und weist darüberhinaus auch eine ausreichende mechanische Festigkeit auf, um die erforderlichen Drücke von bis zu 0,04 kg/cm² zu gewährleisten, ohne daß Risse oder sonstige Beschädigungen auftreten könnten.

Als Grundmaterial wird Polyester-Harz auf der Basis von Orthophtalsäurepolyesterharz mit 35% Monostyrol mit einer Viskosität von 1000 mp verwendet, dem 0,8 bis 1% Kobaltbeschleuniger, bestehend aus einer Lösung von Styrol mit 1% Kobaltnaphtenal sowie als Härter 2% Methylethylketonperoxid, bestehend aus einer normal aktiven Lösung von ca. 9% Aktivsauerstoff, gelöst in Phlegmatisierungsmittel Phtalsäureesther und einem Glykoderivat beigemischt wird. Als Verstärkung werden endlose Glasfasermatten mit Quadratmetergewichten von 450 bzw. 600 g/qm² verwendet. Der Nenndurchmesser der Elementarfaser beträgt 15 µ. Die Deckschicht besteht aus Isophtalsäuerpolyesterharz mit Standardglykol und dispergierter Kieselsäure zuzüglich Monostyrol und Farbpigmenten aus Titanoxid, sowie den o.a. Mengen Kobaldbeschleuniger und Härter.

Der aus diesem Material hergestellte Behälter 1 weist eine sehr gute und dauerhafte, d.h. nicht ermüdende Dehn- bzw. Schrumpffähigkeit bei Temperaturänderungen auf. Beispielsweise ist ein 80 kg Fleisch fassender Behälter bei einer Temperatur von 18°C 620 mm hoch, 470 mm breit und 580 mm lang. Bei dieser Temperatur von 18°C hat der leere Behälter in 25 cm Höhe über dem Boden gemessen einen Umfang von 163,5 cm. Der gefüllte, druckbeaufschlagte Behälter hat dann bei 15°C einen Umfang von 164 cm und bei 3°C von 163,5 cm, so daß auch nach dem Abkühlen in jedem Fall ein ausreichender Druck gewährleistet ist. Dies resultiert daraus, daß der Behälter im warmen Zustand durch Druckbeaufschlagung so stark elastisch gedehnt werden kann, daß beim Abkühlen zunächt diese elastische Vorspannung und nachfolgend ggf. auch die durch den Wärmeausdehnungskoeffizient des verwendeten Materials festgelegte, temperaturbedingte Schrumpfung des Behälters für einen konstanten oder sogar steigenden Druck im Behälter-Innenraum sorgt. Der erfindungsgemäße Behälter 1 kann in jeder Größe und jeder Formgebung hergestellt werden. Insbesondere sind vier verschiedene Normgrößen vorgesehen, d.h. für 45 kg, 80 kg, 150 kg und 300 kg Fleisch.

Erfindungsgemäß erweitert sich der Innenraum 7 des Behälters 1 von seinem Boden 2 aus nach oben. Dabei ist der Deckel 9 vorzugsweise zu der Fläche des Bodens 2 etwa kongruent. Durch diese Ausbildung ist eine sehr gute Entlüftung des Fleisches gewährleistet. Auch bei kleinen Fleischmengen ist der Deckel 9 von den Behälterwandungen 3 bis 6 beabstandet, so daß der Fleischsaft und Luft austreten kann. Weiterhin ist die sich erweiternde Form des Innenraumes 7 auch für die Herstellung des Behälters 1 vorteilhaft, da hierdurch eine Entformung problemlos möglich ist.

Um die Entlüftung, d.h. das Herausdrücken der Luft aus den Fleischzwischenräumen noch zu verbessern, ist es vorteilhaft, wenn der Deckel 9 auf seiner dem Boden 2 des Behälters 1 zugekehrten Unterseite 15 eine vorzugsweise mittig angeordnete Erhebung 16 (Fig. 3a) bzw. 17 (Fig. 3b) aufweist. Die Erhebung 16 weist einen sich von der Unterseite 15 des Deckels 9 weg verjüngenden, trapezförmigen Querschnitt auf, während bei der alternativen Ausgestaltung gemäß Fig. 3b die Erhebung 17 konvex gewölbt ausgebildet ist. Darüberhinaus liegt es im Rahmen der Erfindung, die gesamte Unterseite 15 des Deckels 9 konvex gewölbt auszubilden. In jedem Fall erfolgt die Pressung des Fleisches zunächst ausgehend von der Mitte, so daß die Luft seitlich von innen nach außen herausgedrückt wird. Der in der Zeichnung dargestellte Deckel 9 weist auf seiner dem Boden 2 des Behälters 1 abgekehrten Oberseite 18 einen außermittig angeordneten Handgriff 19 auf, was eine Entnahme des Deckels 9, der aufgrund von Adhäsionskräften an dem Fleisch haften kann, erleichtert. Weiterhin ist es vorteilhaft, wenn der Deckel 9 an seinen Rändern 21 derart abgeschrägt ist, daß die Unterseite 15 eine kleinere Fläche als die Oberseite 18 aufweist. Dies trägt ebenfalls dazu bei, daß Luft gut zwischen dem Deckel 9 und den Wandungen 3 bis 6 austreten kann.

Der Behälter 1 weist im Bereich seiner oberen Öffnung einen die Öffnung umschließenden, sich nach außen erstreckenden Rand 23 auf, der zumindest an zwei diametral gegenüberliegenden Stellen zum Angreifen durch die Druckbeaufschlagungseinrichtung 12 verstärkt ausgebildet ist. Diese verstärkten Stellen liegen zweckmäßigerweise im mittigen Bereich der Ränder 23 von zwei gegenüberliegenden Wandungen 3,5 bzw. 4,6.

Die in Fig. 2 dargestellte Druckbeaufschlagungseinrichtung 12 weist einen U-förmigen Bügel 25 mit einem Steg 26 und zwei parallelen Schenkeln 27, 28 auf. Die beiden Schenkel 27, 28 tragen an Ihren Enden 29 einander zugekehrte Greifer 31 zum Umgreifen des Behälterrandes 23. An dem Steg 26 ist erfindungsgemäß ein Wagenheber 32 befestigt, der eine vertikal in Pfeilrichtung 30 bewegliche Hubstange 33 aufweist. An ihrem unteren Ende trägt die Hubstange 33 vorzugsweise eine Druckplatte 34 zur Auflage auf dem Deckel 9. Im dargestellten Ausführungsbeispiel handelt es sich bei dem Wagenheber 32 um eine mechanische Ausführung, wobei durch Hin- und Herverschwenken eines Betätigungshebels 35 in Pfeilrichtung 36 die Hubstange 33 vertikal nach unten bewegt werden kann, wodurch über die Druckplatte 34 der Deckel 9 in den Behälterinnenraum 7 hineingepreßt wird. Dabei ist es vorteilhaft, wenn die Hubstange 33 des Wagenhebers 32 durch eine mittige Bohrung des Bügelsteges 26 geführt ist, um die Druckkraft in der Deckelmitte aufzubringen. Die an den Bügelschenkeln 27, 28 befestigten Greifer sind durch Winkelschienen gebildet, deren aufeinander zuweisende Schenkel den Behälterrand 23 umgreifen. Weiterhin ist es vorteilhaft, wenn an den Schenkeln 27, 28 mit Höhenabstand zu den Winkelschienen Führungsrollen 37 angeordnet sind, die auf der Oberseite des Behälterrandes 23 zur Auflage kommen. Die Druckbeaufschlagungseinrichtung 12 kann so seitlich auf den Behälterrand 23 aufgeschoben werden. In einer alternativen Ausgestaltung der Erfindung ist es möglich, zumindest einen der Bügelschenkel 27, 28 nach außen schwenkbar auszubilden, wodurch die Druckbeaufschlagungseinrichtung 12 auch von oben auf den Behälter 1 aufgesetzt werden kann.

Zusammenfassend bietet die erfindungsgemäße Ausbildung des Behälters 1 folgende Vorteile :

Hohe mechanische Festigkeit bei gleichzeitig guter Elastizität, geringe Wärmeleitfähigkeit, d.h. gute Wärmeisolierung, leicht zu reinigen, hygienisch, temperatur- und chemikalienbeständig, enthält weder gefährliche noch gesundheitsgefährdende Substanzen. Bei der Aufbewahrung von Frischfleisch stellt sich mit der Zeit aufgrund der Bildung von Milchsäurebakterien ein pH-Wert von ca. 5, 4 ein, was für eine Reifung des Fleisches äußerst vorteilhaft ist. Mit der Erfindung ist es auch möglich, Fleisch mit unterschiedlichem, d.h. hohem und niedrigem pH-Wert zusammen zu lagern, wodurch ein Ausgleich der pH-Werte erreicht wird.

## Ansprüche

1. Vorrichtung zum Aufbewahren und Reifen von Frischfleisch unter mechanischem Druck mit druckbedingtem Austritt des fleischeigenen Saftes beim Preßvorgang, bestehend aus einem Behälter (1) mit einem oben offenen Innenraum zur Aufnahme des Fleisches, einem von oben in den Behälter-Innenraum (7) einsetzbaren Deckel (9), dessen Fläche geringfügig kleiner als die Querschnittsfläche des Behälter-Innenraumes ist, sowie einer den Deckel in den Behälter-Innenraum pressenden Druckbeaufschlagungseinrichtung, **dadurch gekennzeichnet,** daß der Behälter (1) aus einem Material besteht, das eine derartige Elastizität sowie einen derartigen Wärmeausdehnungskoeffizient aufweist, daß temperaturänderungsbedingte Volumenänderungen des Fleisches durch Schrumpfung oder Dehnung des Behälters (1) ausgeglichen werden, so daß innerhalb des Behälters (1) stets möglichst konstante Druckverhältnisse vorliegen.

2. Vorrichtung nach Anspruch 1, **dadurch gekennzeichnet,** daß der Behälter (1) aus einem Material mit geringer Wärmeleitfähigkeit besteht.

3. Vorrichtung nach Anspruch 1 oder 2, **dadurch gekennzeichnet,** daß der Behälter (1) aus einem Kunststoff, insbesondere aus glasfaserverstärktem Kunststoff besteht.

4. Vorrichtung nach Anspruch 3, **dadurch gekennzeichnet,** daß der Behälter (1) aus einer Außenschicht aus Polyester-Harz und Glasfasermatten sowie aus einer Innen-Deckschicht aus Basis-Polyester-Harz vorzugsweise mit beigemischten Pigmenten besteht.

5. Vorrichtung nach Anspruch 3 oder 4, **dadurch gekennzeichnet,** daß der Behälter (1) aus etwa 60% Polyester-Harz, etwa 30% Glasfasermatten und etwa 10% Deckschicht besteht.

6. Vorrichtung nach einem oder mehreren der Ansprüche 1 bis 5, **dadurch gekennzeichnet,** daß sich der Innenraum (7) des Behälters (1) von seinem Boden (2) aus nach oben erweitert, wobei der Deckel (9) vorzugsweise zu der Fläche des Bodens (2) etwa kongruent ist.

7. Vorrichtung nach einem oder mehreren der Ansprüche 1 bis 6, **dadurch gekennzeichnet,** daß der Deckel (9) auf seiner dem Boden (2) des Behälters (1) zugekehrten Unterseite (15) eine vorzugsweise mittig angeordnete Erhebung (16, 17) aufweist.

4

8. Vorrichtung nach Anspruch 7, **dadurch gekennzeichnet,** daß die Erhebung (16) einen sich von der Unterseite (15) des Deckels (9) weg verjüngenden, trapezförmigen Querschnitt aufweist.

9. Vorrichtung nach Anspruch 7, **dadurch gekennzeichnet,** daß die Erhebung (17) konvex gewölbt ausgebildet ist.

10. Vorrichtung nach einem oder mehreren der Ansprüche 1 bis 9, **dadurch gekennzeichnet,** daß der Deckel (9) auf seiner dem Boden (2) des Behälters (1) abgekehrten Oberseite (18) mindestens einen außermittig angeordneten Handgriff (19) aufweist.

11. Vorrichtung nach einem oder mehreren der Ansprüche 1 bis 10, **dadurch gekennzeichnet,** daß der Behälter (1) im Bereich seiner oberen Öffnung einen die Öffnung umschließenden, sich nach außen erstreckenden Rand (23) aufweist, der zumindest an zwei diametral gegenüberliegenden Stellen zum Angreifen durch die Druckbeaufschlagungseinrichtung (12) verstärkt ausgebildet ist.

12. Vorrichtung nach einem oder mehreren der Ansprüche 1 bis 11, **dadurch gekennzeichnet,** daß die Druckbeaufschlagungseinrichtung (12) einen U-förmigen Bügel (25) mit einem Steg (26) und zwei parallelen Schenkeln (27, 28) aufweist, wobei die Schenkel (27, 28) an ihren Enden (29) einander zugekehrte Greifer (31) zum Umgreifen dem Behälterrandes (23) tragen und an dem Steg (26) ein Wagenheber (32) befestigt ist, der eine vertikal in den Behälter-Innenraum (7) bewegliche Hubstange (33) aufweist, die an ihrem unteren Ende vorzugsweise eine Druckplatte (34) zur Auflage auf dem Deckel (9) trägt.

13. Vorrichtung nach Anspruch 12, **dadurch gekennzeichnet,** daß die Hubstange (33) des Wagenhebers (32) durch eine mittige Bohrung des Bügelsteges (26) geführt ist.

## Claims

1. Device for preserving and maturing fresh meat under mechanical pressure, with the juice of the meat emerging as a result of pressure during the pressing procedure, comprising a container (1) having an upwardly open interior space for receiving the meat, a lid (9) which may be introduced into the container interior space (7) from above, and whereof the surface area is slightly smaller than the cross-sectional surface area of the container interior space, and a pressure-applying apparatus pressing the lid into the container interior space, characterized in that the container (1) comprises a material which has an elasticity and a heat expansion coefficient such that changes in volume in the meat, effected by changes in temperature, are compensated by contraction or expansion of the container (1), so that pressure conditions as constant as possible are always present within the container (1).

2. Device according to Claim 1, characterized in that the container (1) comprises a material of low heat conductivity.

3. Device according to Claim 1 or 2, characterized in that the container (1) comprises a plastics, in particular a glass-fibre reinforced plastics.

4. Device according to Claim 3, characterized in that the container (1) comprises an outer layer of polyester resin and glass-fibre matting and an inner coating layer based on polyester resin, preferably with pigments mixed in.

5. Device according to Claim 3 or 4, characterized in that the container (1) comprises approximately 60% polyester resin, approximately 30% glass-fibre matting and approximately 10% coating layer.

6. Device according to one or more of Claims 1 to 5, characterized in that the interior space (7) of the container (1), starting from its base (2), widens towards the top, the lid (9) preferably being approximately congruent with the surface of the base (2).

7. Device according to one or more of Claims 1 to 6, characterized in that the lid (9) has on its underside (15) facing the base (2) of the container (1) a raised portion (16, 17), preferably arranged centrally.

8. Device according to Claim 7, characterized in that the raised portion (16) has a trapezoidal cross-section tapering away from the underside (15) of the lid (9).

9. Device according to Claim 7, characterized in that the raised portion (17) is of convexly bulging construction.

10. Device according to one or more of Claims 1 to 9, characterized in that the lid (9) has on its upper side (18) remote from the base (2) of the container (1) at least one handle (19) arranged off-centre.

11. Device according to one or more of Claims 1 to 10, characterized in that the container (1) has in the region of its upper opening a rim (23) which surrounds the opening, extends outwards and is constructed to be strengthened at least at two diametrically opposed points for gripping by the pressure-applying apparatus (12).

12. Device according to one or more of Claims 1 to 11, characterized in that the pressure-applying apparatus (12) has a U-shaped stirrup piece (25) having a web (26) and two parallel legs (27, 28), the legs (27, 28) bearing at their ends (29) mutually facing grippers (31) for gripping around the container rim (23), and there being secured to the web (26) a jack (32) which has a travelling rod (33) movable vertically into the container interior space (7) and preferably bearing at its lower end a pressure plate (34) for bearing on the lid (9).

13. Device according to Claim 12, characterized in that the travelling rod (33) of the jack (32) is passed through a central bore of the stirrup-piece web (26).


**Revendications**

1. Dispositif pour la conservation et la maturation de viande fraîche sous l'exercice d'une pression mécanique, le jus de viande sortant lors de la compression comprenant un récipient (1) dont l'espace intérieur est ouvert vers le haut pour accueillir la viande, un couvercle (9) pouvant être placé depuis le haut dans l'espace intérieur (7) du récipient, la surface de ce couvercle étant légèrement inférieure à la surface en section transversale de l'espace intérieur du récipient, ainsi qu'un dispositif de compression, poussant le couvercle dans l'espace intérieur du récipient, caractérisé par le fait que le récipient (1) est réalisé en un matériau qui possède une élasticité et un coefficient de dilatation thermique tels que les modifications de volume de la viande en fonction des variations de température soient compensées par la contraction ou la dilatation du récipient (1), de manière à ce qu'une pression aussi constante que possible règne à l'intérieur du récipient (1).

2. Dispositif selon la revendication 1, caractérisé par le fait que le récipient (1) est réalisé en un matériau à faible conductibilité thermique.

3. Dispositif selon la revendication 1 ou 2, caractérisé par le fait que le récipient (1) est réalisé en une matière synthétique, en particulier en une matière synthétique à armature en fibres de verre.

4. Dispositif selon la revendication 3, caractérisé par le fait que le récipient (1) consiste en une couche extérieure en une résine de polyester et du verre textile, et une couche intérieure de couverture en une résine polyester de base, à laquelle sont mélangés des pigments.

5. Dispositif selon la revendication 3 ou 4, caractérisé par le fait que le récipient (1) consiste en 60% environ de résine polyester, 30% environ de verre textile et 10% environ d'une couche de couverture.

6. Dispositif selon l'une ou plusieurs des revendications 1 à 5, caractérisé par le fait que l'espace intérieur (7) du récipient (1) s'élargit vers le haut à partir de son fond (2), le couvercle (9) et la surface du fond (2) étant de préférence sensiblement congruents.

7. Dispositif selon l'une ou plusieurs des revendications 1 à 6, caractérisé par le fait que le couvercle (9) possède sur la face inférieure (15) disposée en regard du fond (2) du récipient (1), un renflement (16, 17), de préférence central.

8. Dispositif selon la revendication 7, caractérisé par le fait que le renflement (16) a une section transversale trapézoïdale qui se rétrécit à partir de la face inférieure (15) du couvercle (9).

9. Dispositif selon la revendication 7, caractérisé par le fait que le renflement (17) est convexe.

10. Dispositif selon l'une ou plusieurs des revendications 1 à 9, caractérisé par le fait que le couvercle (9) présente, sur la face supérieure (18) opposée au fond (2) du récipient (1), une poignée (19) disposée de manière excentrée.

11. Dispositif selon l'une ou plusieurs des revendications 1 à 10, caractérisé par le fait que le récipient (10) possède dans la région de son ouverture supérieure, un bord (23) dirigé vers l'extérieur, qui entoure ladite ouverture, ce bord étant renforcé en au moins deux endroits diamétralement en regard, pour permettre l'attaque du dispositif de compression (12).

12. Dispositif selon l'une ou plusieur des revendications 1 à 11, caractérisé par le fait que le dispositif de compression (12) présente un étrier en U (25) comprenant une traverse (26) et deux bras parallèles (27, 28), les bras (27, 28) portant à leurs extrémités (29) des griffes (31) en regard pour entourer le bord (23) du récipient et qu'un vérin élévateur (32) est fixé sur la traverse (26), qui présente une tige (33) déplaçable verticalement vers l'espace intérieur (7) du récipient, cette tige portant de préférence à son extrémité inférieure une plaque de pression (34), appliquée sur le couvercle (9).

13. Dispositif selon la revendication 12, caractérisé par le fait que la tige (33) du vérin élévateur (32) passe par un alésage central de la traverse (26) de l'étrier.

FIG.1

FIG.2

FIG.3a

FIG.3b